(19) Europäisches Patentamt
European Patent Office
Office européen des brevets

(11) Veröffentlichungsnummer : **0 386 509 B1**

(12) # EUROPÄISCHE PATENTSCHRIFT

(45) Veröffentlichungstag der Patentschrift : **03.03.93 Patentblatt 93/09**

(21) Anmeldenummer : **90103087.4**

(22) Anmeldetag : **17.02.90**

(51) Int. Cl.$^5$ : **A01N 47/14,** A01N 47/16, A01N 43/64, A01N 43/60, A01N 33/12, C07D 251/00, C07C 333/14, // C07C329/14

(54) **Mikrobiozide Mittel.**

(30) Priorität : **04.03.89 DE 3907071**

(43) Veröffentlichungstag der Anmeldung : **12.09.90 Patentblatt 90/37**

(45) Bekanntmachung des Hinweises auf die Patenterteilung : **03.03.93 Patentblatt 93/09**

(84) Benannte Vertragsstaaten : **AT BE CH DE FR GB IT LI NL**

(56) Entgegenhaltungen :
**EP-A- 0 089 268**
**DD-A- 228 162**
**DE-B- 2 528 994**
**US-A- 3 539 612**

(73) Patentinhaber : **Degussa Aktiengesellschaft**
**Weissfrauenstrasse 9**
**W-6000 Frankfurt am Main 1 (DE)**

(72) Erfinder : **Werle, Peter, Dr.**
**Im Börner 43**
**W-6460 Gelnhausen 2 (DE)**
Erfinder : **Trageser, Martin**
**Leipziger Strasse 14**
**W-6460 Gelnhausen-Hoechst (DE)**
Erfinder : **Weiss, Svea**
**Danziger Strasse 1a**
**W-6054 Rodgau 6 (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft mikrobiozide Mittel, welche mindestens ein mikrobiozid wirksames, quaternäres Ammoniumsalz, das außer der Ammoniumstruktur noch das Strukturelement eines Dithiokohlensäure-O,S-diesters oder eines Dithiocarbaminsäureesters aufweist, in wäßriger oder alkoholischer Lösung enthält. Bevorzugte Mittel enthalten außer dem genannten Ammoniumsalz noch andere mikrobiozid wirksame Stoffe, wie insbesondere Umsetzungsprodukte aus niederen Mono- oder Dialdehyden mit primären oder sekundären Aminen.

Quaternäre Ammoniumverbindungen unterschiedlicher Struktur finden als Wirkstoffe in mikrobioziden Mitteln für den Einsatz im Hygienebereich und in der Industrie Anwendung. Mikrobiozide Mittel enthalten einen oder mehrere biozid wirksame Stoffe der gleichen oder verschiedener Stoffklassen in gelöster oder ggf. suspendierter oder emulgierter Form, wobei meistens Wasser und/oder niedere Alkohole als Lösungsmittel dienen.

Die anwendungsspezifischen Erfordernisse, wie Wirkungsspektrum, biologische Abbaubarkeit, gute Wirksamkeit über einen weiten pH-Bereich, sowie Aspekte der Ökologie und Toxikologie und nicht zuletzt der Wirtschaftlichkeit schaffen ein Bedürfnis, die bestehende Palette an quaternäre Ammoniumsalze enthaltenden Mitteln zu erweitern. Dies kann einerseits durch strukturelle Veränderungen der quaternären Ammoniumverbindung, andererseits durch Kombination solcher Verbindungen mit mikrobiozid wirksamen Stoffen ähnlicher oder völlig unterschiedlicher Struktur erfolgen. Mehr als ein Wirkstoff enthaltende mikrobiozide Mittel weisen im allgemeinen ein breiteres Wirkungsspektrum auf. Durch die Kombination mehrerer Mikrobiozide ergeben sich zum Teil auch synergistische Effekte.

Unter den mikrobiozid wirksamen quaternären Ammoniumsalzen sind beispielhaft zu nennen: ($C_{12}$-$C_{16}$)-Alkyldimethylbenzylammoniumhalogenide, wobei der Phenylrest auch durch Chloratome substituiert sein kann und anstelle der beiden Methylgruppen auch Hydroxyethylgruppen stehen, Alkylphenoxyethoxyalkyldimethylbenzylammoniumhalogenide, ($C_8$-$C_{16}$)-Alkyltrimethyl- oder Di-($C_8$-$C_{10}$)-alkyldimethylammoniumhalogenide - vgl. M.H. Angele in Seifen-Öle-Fette-Wachse 104 (1978), 433-434.

Es ist bekannt, daß aus längerkettigem Alkyldimethylamin, wie Dodecyldimethylamin, und Epichlorhydrin leicht zugängliche quaternäre Ammoniumsalze mit einem 2-Hydroxy-3-chlorpropyl-Substituenten mikrobiozide Aktivität aufweisen. Es zeigte sich aber, daß die biozide Wirkung gegenüber Pilzen, wie Aspergillus niger, nicht befriedigend ist. Durch eine Verkürzung der Alkylgruppe von 12 auf 8 C-Atome nimmt zwar die Neigung zur Schaumbildung ab, gleichzeitig sinkt aber auch die bakterizide Wirkung. Es bestand somit ein Interesse daran, das Eigenschaftsspektrum dieser leicht zugänglichen Stoffklasse quaternärer Ammoniumsalze durch einfache chemische Modifizierung so zu verbessern, daß sie allein oder in Kombination mit anderen Mikrobioziden als Wirkstoff in wäßrigen oder alkoholischen mikrobioziden Mitteln eingesetzt werden können.

Gefunden wurden nun mikrobiozide Mittel, enthaltend mindestens ein mikrobiozid wirksames quaternäres Ammoniumsalz in einer wäßrigen oder alkoholischen Lösung, das dadurch gekennzeichnet ist, daß das quaternäre Ammoniumsalz die Struktur der allgemeinen Formel (I)

$$\left[ R^1 - \overset{\overset{\displaystyle R^2}{|\,+}}{\underset{\underset{\displaystyle R^3}{|}}{N}} - CH_2 - \underset{\underset{\displaystyle OH}{|}}{CH} - CH_2 - S - \underset{\underset{\displaystyle S}{\|}}{C} - X \right]_n A^{n-} \qquad (I)$$

aufweist, worin bedeuten:

$R^1$ eine lineare ($C_8$-$C_{16}$)-Alkylgruppe oder eine ($C_8$-$C_{16}$)-Alkylphenoxyethoxyethylgruppe, wenn $R^2$ und $R^3$ gleich sind und Methyl oder Hydroxyethyl bedeuten, oder

ein Strukturelement der allgemeinen Formel (II)

$$\left. - Q - \overset{\overset{\displaystyle R^2}{+|}}{\underset{\underset{\displaystyle R^3}{|}}{N}} - CH_2 - \underset{\underset{\displaystyle OH}{|}}{CH} - CH_2 - S - \underset{\underset{\displaystyle S}{\|}}{C} - X \right]_n A^{n-} \qquad (II),$$

worin Q für $\alpha$, $\omega$-($C_2$-$C_6$)-Alkylen, das innenständig auch methylsubstituiert sein kann,

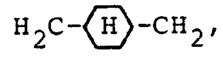

$CH_2$-$CH_2$-O-$CH_2$-$CH_2$ oder $CH_2$-$CH_2$-N($CH_3$)-$CH_2$-$CH_2$ steht, wenn $R^2$ und $R^3$ in Formel (I) und (II) jeweils Methyl bedeuten oder im Falle von Q gleich Ethylen $R^2$ in (I) und II Methyl und $R^3$ in (I) und (II) auch gemeinsam für eine Ethylengruppe stehen können;

X die Gruppe $OR^4$, worin $R^4$ für einen linearen oder verzweigten Alkylrest mit 8 bis 18 C-Atomen steht, oder

die Gruppe $NR^5R^6$, worin $R^5$ Wasserstoff oder eine lineare ($C_8$-$C_{18}$)-Alkylgruppe und $R^6$ eine ($C_1$-$C_{18}$)-Alkyl- oder Benzylgruppe bedeuten oder $NR^5R^6$ für den Pyrrolidino-, 1,3-Oxazolidino, Piperidino oder Morpholinorest steht, wobei in das Strukturelement (II) enthaltenden Salzen die Gruppe $NR^5R^6$ mindestens einen linearen ($C_8$-$C_{12}$)-Alkylrest aufweist, oder

ein Strukturelement der allgemeinen Formel (III) oder (IV)

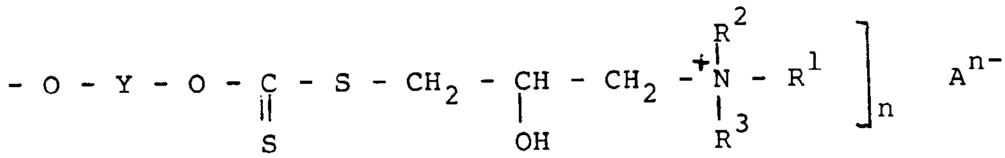 (III)

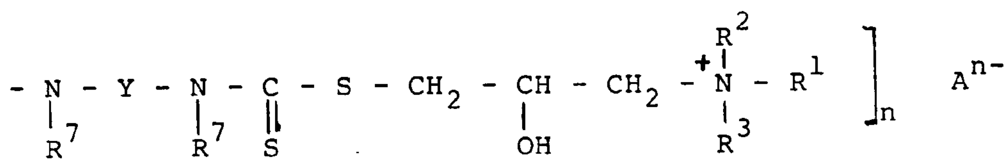 (IV),

worin Y die gleiche Bedeutung wie Q hat und $R^7$ Wasserstoff oder Methyl bedeutet, jedoch im Falle von Y gleich Ethylen beide Substituenten $R^7$ auch gemeinsam für eine Ethylengruppe stehen können, und wobei in das Strukturelement (III) oder IV enthaltenden Salzen $R^1$ nicht dem Strukturelement (II) entspricht;

A ein Halogenid, Sulfat, Hydrogensulfat, Hydrogen- oder Dihydrogenphosphat, Nitrat, Formiat, Acetat, Benzoat und

n die Wertigkeit 1 oder 2 des Anions.

Die erfindungsgemäßen Mittel enthalten als Wirkstoff Stoffe, welche im gleichen Molekül eine quaternäre Ammoniumstruktur und das Strukturelement eines Dithiokohlensäure-O,S-diesters oder eines Dithiocarbaminsäureesters aufweisen. Zwischen dem Ammoniumstickstoff und dem Schwefelatom des S-Esters befindet sich ein $CH_2$-CHOH-$CH_2$-Strukturelement.

Besonders bevorzugte mikrobiozide Mittel enthalten quaternäre Ammoniumsalze der Formel (I), insbesondere deren Chloride, worin ferner bedeuten: $R^1$ eine lineare ($C_8$-$C_{12}$)-Alkylgruppe, $R^2$ und $R^3$ jeweils eine Methylgruppe, X eine $R^4$O- oder $R^5R^6$N-Gruppe, worin $R^4$ eine lineare ($C_8$-$C_{12}$)-Alkylgruppe, $R^5$ Wasserstoff oder eine lineare ($C_8$-$C_{12}$)-Alkylgruppe oder, sofern $R^1$ eine n-Dodecylgruppe bedeutet, eine Methylgruppe.

Der Wirkstoff der Formel I kann ein oder zwei Ammoniumstrukturen im gleichen Molekül aufweisen, nämlich in Verbindungen der Formel (I) mit dem Strukturelement der allgemeinen Formel (II), (III) oder (IV). Salze der Formel (I) mit dem Strukturelement III oder IV für X, worin $R^1$ eine lineare ($C_8$-$C_{12}$)-Alkylgruppe, $R^2$ und $R^3$ beide eine Methylgruppe, Y eine $\alpha$, $\omega$-($C_2$-$C_6$)-Alkylen-, eine $CH_2CH_2$-O-$CH_2CH_2$- oder $CH_2CH_2$-N($CH_3$)$CH_2CH_2$-Gruppe und $R^7$ Wasserstoff und A vorzugsweise Chlorid bedeuten, sind wegen ihrer leichteren Zugänglichkeit im Vergleich zu den Salzen mit dem Strukturelement gemäß allgemeiner Formel (II) bevorzugt.

Die quaternären Ammoniumsalze der allgemeinen Formel (I), von welchen mindestens eine Verbindung in den erfindungsgemäßen Mitteln zugegen sein muß, lassen in besonders einfacher Weise herstellen, indem man in wäßriger oder alkoholischer Lösung ein Alkalisalz einer Dithiocarbaminsäure der allgemeinen Formel (Va) oder (Vb)

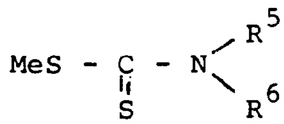 (Va) 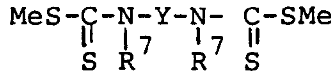 (Vb)

oder ein Alkalisalz eines Dithiokohlensäure-O-esters der allgemeinen Formel (Va) oder (Vb)

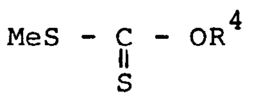 (Vc) 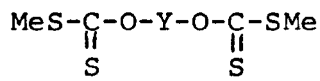 (Vd),

worin Me Li, Na oder K sein kann und $R^4$, $R^5$, $R^6$, $R^7$ und X die gleiche Bedeutung wie in den allgemeinen Formeln (I), (III) und (IV) haben, mit einem 3-Halogen-2-hydroxypropyltrialkylammoniumsalz der allgemeinen Formel (VIa) oder (VIb)

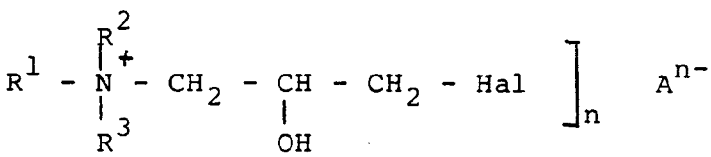 (VIa)

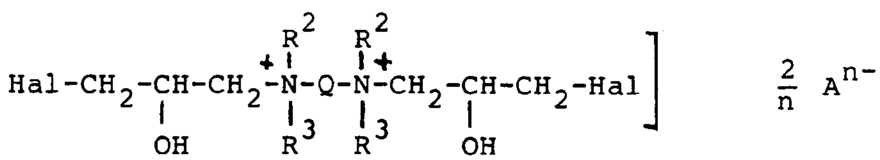 (VIb),

worin Hal Chlor oder Brom und $R^1$, $R^2$, $R^3$, A, n und Q die gleiche Bedeutung wie in Formel (I) und II haben, $R^1$ in Formel (VIa) aber nicht dem Strukturelement der Formel (II) entspricht, umsetzt und das gebildete Salz der Formel (I) in dem Fachmann bekannter Weise aus dem Reaktionsgemisch isoliert. Die Umsetzung erfolgt bei Raumtemperatur oder mäßig erhöhter Temperatur.

Bei der Herstellung des mikrobioziden Mittels kann das Salz der Formel (I) direkt in dem gewünschten Lösungsmittel gelöst werden, wobei als Lösungsmittel im wesentlichen Wasser, niedere Alkohole mit 1 bis 4 C-Atomen oder Gemische aus Wasser und niederen Alkoholen verwendet werden. Es können jedoch auch weitere Lösungsmittel zugegen sein. Im allgemeinen muß für die Herstellung des mikrobioziden Mittels das Salz der Formel (I) aus dem Reaktionsgemisch seiner Herstellung nicht erst isoliert oder gar aufwendig gereinigt werden, sondern man kann das Reaktionsgemisch direkt verwenden. In diesem Fall wird man nur die gewünschte Konzentration durch Zugabe des Lösungsmittels einstellen. Die Konzentration des mikrobioziden Mittels wird im allgemeinen zwischen 1 und 60 Gew.-% liegen, wobei aber höhere und niedrige Konzentrationen möglich sind. Die Herstellung des Wirkstoffes und des mikrobioziden Mittels läßt sich, und dies ist ein besonderer Vorteil, in einem Schritt durchführen. Das so hergestellte Mittel enthält in diesem Falle allerdings auch das bei der Herstellung des quaternären Ammoniumsalzes gleichzeitig anfallende Alkalisalz, wie z. B. NaCl.

Die Reaktionspartner zur Herstellung des Wirkstoffes der Formel (I) des mikrobioziden Mittels werden im allgemeinen im äquivalenten Verhältnis miteinander umgesetzt, also im Molverhältnis 1:1, wenn Verbindungen gemäß Formel (Va) oder (Vc) mit Verbindungen gemäß Formel (VIa) umgesetzt werden und im Molverhältnis 1:2, wenn anstelle der Verbindungen (Va) oder (Vc) jene der Formel (Vb) oder (Vd) eingesetzt werden. Verbindungen der Formel (VIb) werden mit Verbindungen der Formel (Va) oder (Vc) im Molverhältnis 1:2 umgesetzt. Ein Überschuß eines Reaktionspartners stört im allgemeinen nicht. Ein solcher Überschuß eines Reaktionspartners kann sogar nützlich sein, wenn das Reaktionsgemisch der Umsetzung ohne Isolierung oder Reinigung des gebildeten quaternären Ammoniumsalzes der Formel (I) direkt, ggf. nach Zugabe von weiterem Lösungsmittel und ggf. weiteren mikrobiozid wirksamen systemverträglichen Stoffen, als mikrobiozides Mittel

Verwendung finden soll. Der Fachmann wird mittels bekannter Bestimmungsmethoden im Einzelfall prüfen, inwieweit im speziellen Anwendungsfall die mikrobiozide Wirkung sowie die anderen anwendungstechnischen Eigenschaften eines Mittels, das außer dem Wirkstoff gemäß Formel (I) auch noch eine der mikrobiozid wirksamen Ausgangskomponenten enthält, gegenüber einem nur den Wirkstoff gemäß Formel (I) enthaltenden Mittel zusätzliche Vorteile aufweist.

An sich ist es bekannt, das Wirkungsspektrum eines mikrobioziden Mittels durch physikalische Kombination von Mikrobioziden der gleichen oder verschiedener Stoffklassen zu erweitern. Die erfindungsgemäßen Mittel enthalten ein quaternäres Ammoniumsalz der Formel (I), das seinerseits durch chemische Kombination von zwei unterschiedlichen Stoffklassen zugänglich ist. Auf diese Weise wurden aus zum Teil nur mäßig mikrobiozid wirksamen Ausgangsstoffen hochwirksame Mikrobiozide mit erweitertem Wirkungsspektrum erhalten - dies folgt aus den Beispielen.

Die mikrobioziden Mittel der Erfindung können zur Bekämpfung verschiedener Mikroorganismen, insbesondere Bakterien, Pilzen, und Algen, eingesetzt werden. Mittel, welche ein Salz der Formel (I) mit $R^1$ gleich n-Octyl und X gleich n-Octyloxy, Methylamino, n-Octylamino oder Di-n-octylamino enthalten, zeichnen sich durch ihre geringe Neigung zum Schäumen aus. Die Mittel können beispielsweise in technischen Produkten, wie Farbdispersionen, Koalinslurries, Bohr- und Schneidflüssigkeiten, zur Schleimbekämpfung in der Papierindustrie sowie zur Behandlung von Brauch-, Prozeß- und Kühlwässern Anwendung finden.

Wie schon gesagt, können die erfindungsgemäßen Mittel außer einem oder mehreren Stoffen der Formel (I) auch andere mikrobiozid wirksame Komponenten enthalten. Solche andere Wirkstoffe können, bezogen auf die Gesamtheit der Wirkstoffe, in einer Menge von 1-99 Gew.-% zugegen sein. Auf die Ausgangsverbindungen gemäß Formel (V) bzw. (VI) als Bestandteil solcher Kombinationen wurde bereits hingewiesen; infrage kommen hier nur jene Verbindungen der Formel (V) bzw. (VI), welche selbst eine ausreichende mikrobiozide Aktivität entfalten.

Die erfindungsgemäßen Mittel können auch zusätzlich ein oder mehrere andere quaternäre Ammoniumsalze mit mikrobiozider Wirkung enthalten. Als solche kommen insbesondere jene infrage, welche eine ($C_8$-$C_{12}$)-Alkylgruppe, zwei Methyl- oder Hydroxyethylgruppen und eine zweite ($C_8$-$C_{12}$)-Alkylgruppe oder eine Benzyl- oder ggf. im Kern chlorierte Benzylgruppe oder eine Alkylphenoxyethoxyalkylgruppe oder eine Methylgruppe am Stickstoff gebunden enthalten.

Prinzipiell können auch strukturelle, ganz andere Stoffklassen an Mikrobioziden in den Mitteln enthalten sein. Hierbei ist in Vorversuchen jedoch die wechselseitige Verträglichkeit dieser Stoffe mit jenen der Formel (I) zu prüfen.

Vorteilhafte Mittel mit gegenüber den einzelnen Wirkstoffen synergistisch erhöhter Wirksamkeit enthalten neben der oder den Verbindungen der Formel (I) mikrobiozid wirksame Umsetzungsprodukte aus aliphatischen $C_1$- bis $C_5$- Mono- oder Dialdehyden mit primären oder sekundären Aminen. Von den Aminen sind Ethanolamin und Diethanolamin besonders gut geeignet.

Es wurde gefunden, daß mikrobiozide Mittel, enthaltend mindestens eine Verbindung der Formel (I) und ein Umsetzungsprodukt von Ethanolamin mit Formaldehyd, wobei die Reaktionspartner im Molverhältnis 1:1 in Gegenwart von Wasser bei Raumtemperatur miteinander zur Reaktion gebracht werden, ein gegenüber den einzelnen Mikrobioziden gesteigertes Wirkungsspektrum aufweisen. Bei dem Umsetzungsprodukt aus Formaldehyd und Ethanolamin handelt es sich um 1,3,5-Tris(2-hydroxyethyl)-hexahydro-s-triazin. Bezogen auf den Gesamtgehalt an Mikrobioziden enthält das Mittel vorzugsweise 75-25 Gew.-% 1,3,5-Tris(2-hydroxyethyl)-hexahydro-s-triazin und 25-5 Gew.-% an einem oder mehreren Salzen der Formel (I). Bevorzugt enthält das Mittel ein Salz der Formel (I), insbesondere ein Chlorid, worin $R^1$ eine lineare ($C_8$-$C_{12}$)-Alkylgruppe, $R^2$ und $R^3$ Methylgruppen und X den Rest $OR^4$ oder $NR^5R^6$ bedeuten.

Um ein mindestens ein Salz der Formel (I) und das genannte Triazin enthaltendes mikrobiozides Mittel herzustellen, können die Wirkstoffe in Wasser oder einem wäßrigen, vorzugsweise einen niederen Alkohol enthaltenden Lösungsmittel gelöst und auf die gewünschte Konzentration gebracht werden. Die leichte Herstellbarkeit des Triazins aus Formaldehyd und Ethanolamin gestattet es aber, für die Herstellung des mikrobioziden Mittels direkt das Reaktionsgemisch aus seiner Herstellung zu verwenden und dem Gemisch ein oder mehrere Salze der Formel (I) oder ein solche Salze enthaltendes Reaktionsgemisch zuzufügen, wobei vorher oder nachher oder zusammen mit der Zugabe des Salzes durch Lösungsmittelzugabe die gewünschte Konzentration eingestellt werden kann.

Durch die Kombination eines Salzes der Formel I mit dem aus Formaldehyd und Ethanolamin zugänglichen Triazin-Derivat gelangt man zu mikrobioziden Mitteln mit außergewöhnlich günstigem Kosten-Wirkungsverhältnis. Die mikrobiozide Wirksamkeit des Triazins allein ist als mäßig zu bezeichnen, weil, wie aus dem Beispiel 10 folgt, zur Erlangung einer Abtötungsrate von 99,9 % der untersuchten Mikroorganismen eine Anwendungskonzentration von 100 bis 250 ppm erforderlich ist; andererseits ist das Triazin sehr preiswert, da es sowohl aus billigen Rohstoffen als auch in sehr einfacher Weise hergestellt werden kann. Salze der Formel

(I) sind zwar biozid viel wirksamer als die Triazine, sie sind aber auch teuerer. Durch eine erfindungsgemäße Kombination gelangt man zu Mitteln, welche bei gleicher Gesamtkonzentration an Mikrobioziden die mikrobiozide Wirkung der Salze der Formel (I) erreichen, obgleich deren Anteil nur noch beispielsweise ein Zehntel der Gesamtkonzentraion beträgt. Ein weiterer Vorteil dieser Mittel besteht in ihrer leichten biologischen Abbaubarkeit und zwar bei einer Hemmkonzentration von 100 ppm. Das in Beispiel 9 hergestellte, erfindungsgemäß kombinierte Mittel hat sich als nicht korrosiv erwiesen.

Die Beispiele umfassen die Herstellung der in den mikrobioziden Mitteln enthaltenen quaternären Ammoniumsalze der Formel (I), die Herstellung eines zusätzlich ein Umsetzungsprodukt aus Formaldehyd und Ethanolamin enthaltenden erfindungsgemäßen Mittels sowie die Prüfung der Mittel auf ihre mikrobiozide Wirkung.

Beispiel 1

Herstellung des Salzes gemäß Formel (I) mit X=$NR^5R^6$, worin $R^1$=n-$C_{12}H_{25}$; $R^2$=$R^3$=$CH_3$; $R^5$=H; $R^6$=$CH_3$ und A=$Cl^-$ bedeuten. (1-Dodecanaminium, N-[2-hydroxy-3-[[(methylamino)-thioxomethyl]thio]propyl]-N,N-dimethyl-, chlorid):

Zu 320 g einer 40 gew.-%igen wäßrigen Lösung von Natrium-N-methyl-dithiocarbamat gibt man 450 g Isopropanol und tropft dann 840 g einer 40 gew.-%igen wäßrigen Lösung von 3-Chlor-2-hydroxypropyl-N,N,N-dimethyldodecylammoniumchlorid zu. Man läßt den Reaktionsansatz über Nacht stehen und trennt das sich ausbildende zweiphasige System. Die obere, i-propanol-haltige Phase wird mehrere Stunden bei 0 °C gelagert. Das oben bezeichnete Salz kristallisiert in langen, farblosen Nadeln aus. Schmelzpunkt: 72 °C.

| | | | | | |
|---|---|---|---|---|---|
| MG 413,1 | Ber. | C 55,4 | H 10,0 | N 6,8 | S 15,6 |
| $C_{19}H_{41}N_2OS_2Cl$ | Gef. | C 55,2 | H 10,0 | N 6,5 | S 15,3 |

Die oben angegebene Struktur wurde durch IR- und NMR-Messungen bestätigt.

Beispiel 2

Herstellung des Salzes gemäß Formel (I) mit X=$NR^5R^6$, worin $R^1$=n-$C_{12}H_{25}$; $R^2$=$R^3$=$CH_3$; $R^5$=$R^6$=n-$C_8H_{17}$; A=Cl bedeuten. (1-Dodecanaminium, N-[2-hydroxy3-[[(di-octylamino) thioxomethyl]thio]propyl]-N,N-dimethyl-, chlorid):

Zu 1.130 g einer 30 gew.-%igen Lösung von Natrium-N,N-dioctyldithiocarbamat in einer 1:1 Mischung aus Wasser/Isopropanol werden 840 g einer 40,7 gew.-%igen wäßrigen Lösung von 3-Chlor-2hydroxy-propyl-N,N,N-dimethyldodecylammoniumchlorid zugetropft. Der sich abscheidende ölige Niederschlag wird von der kochsalzhaltigen wäßrigen Phase getrennt, mit Wasser gewaschen und im Vakuum getrocknet. Hochviskoses, schwach gelbliches Öl, praktisch geruchlos.

| | | | | | |
|---|---|---|---|---|---|
| MG 463,5 | Ber. | C 65,5 | H 11,5 | N 4,5 | S 10,2 |
| $C_{34}H_{71}N_2OS_2Cl$ | Gef. | C 64,9 | H 11,5 | N 4,3 | S 10,0 |

Beispiel 3

Herstellung des Salzes der Formel (I) mit X=$NR^4R^5$, worin $R^1$=n-$C_8H_{17}$; $R^2$=$R^3$=$CH_3$; $R^5$=H; $R^6$=n-$C_8H_{17}$; A=Cl bedeuten. (1-Octanaminium, N-[2-hydroxy-3-[[(octylamino)thioxomethyl] thio]propyl]-N,N-dimethyl-, chlorid):

Zu 1.791 g einer 12 gew.-%igen wäßrigen Lösung von Natrium-N-octyl-dithiocarbamat werden 530 g einer 54 gew.-%igen wäßrigen Lösung von 3-Chlor-2hydroxypropyl-N,N,N-dimethyloctylammoniumchlorid zugegeben. Das gewünschte Salz fällt als Feststoff sofort aus, wird abgesaugt, mit Wasser gewaschen und im Vakuum getrocknet. Eine weitere Reinigung kann durch Umfällen oder Umkristallisation aus Alkohol erfolgen.

| | | | | | |
|---|---|---|---|---|---|
| MG 455 | Ber. | C 58,0 | H 10,3 | N 6,1 | S 14,0 |
| $C_{22}H_{47}N_2OS_2Cl$ | Gef. | C 57,5 | H 10,3 | N 5,8 | S 14,4 |

Beispiel 4

Herstellung des Salzes der Formel (I) mit X=$NR^5R^6$, worin $R^1=R^5=R^6$=n-$C_8H_{17}$; $R^2=R^3=CH_3$; A=Cl bedeuten. (1-Octanaminium, N-[2-hydroxy-3-[[(di-octylamino)thioxomethyl]thio]propyl]-N,N-dimethyl-, chlorid):

Zu 1.130 g einer 30 gew.-%igen Lösung von Natrium-N,N-dioctyldithiocarbamat in einer $H_2O$/i-Propanol-Mischung werden 530 g einer 54 gew.-%igen wäßrigen Lösung von 3-Chlor-2hydroxypropyl-N,N,N-dimethyloctylammoniumchlorid gegeben. Beim Stehenlassen bilden sich sich 2 Phasen aus, die obere, organische Phase wird abgetrennt, mit Wasser gewaschen, vom iso-Propanol befreit und getrocknet. Viskoses, gelbes Öl.

| | | | | | |
|---|---|---|---|---|---|
| MG 567,4 | Ber. | C 63,5 | H 11,2 | N 4,9 | S 11,3 |
| $C_{30}H_{63}N_2OS_2Cl$ | Gef. | C 62,8 | H 11,4 | N 4,7 | S 10,9 |

Beispiel 5

Herstellung des Salzes der Formel (I) mit X=$OR^4$, worin $R^1=R^4$=n-$C_8H_{17}$; $R^2=R^3=CH_3$ und A=Cl bedeuten. (1-Octanaminium, N-[2-hydroxy-3-[[(octyloxy)thioxomethyl]thio]propyl]-N,N-dimethyl-, chlorid):

244 g Kalium-dithiokohlensäure-O-n-octylester werden in 400 ml Wasser gelöst und 530 g einer 54 gew-.-%igen Lösung von 3-Chlor-2hydroxypropyl-N,N,N-dimethyloctylammoniumchlorid zugegeben. Das gewünschte Salz scheidet sich als gelbes Öl ab und wird durch Zugabe von Chloroform gelöst. Das 2-phasige System wird getrennt, die Chloroformphase sorgfältig mit Wasser gewaschen und eingeengt. Trocknen im Vakuum.

| | | | | | |
|---|---|---|---|---|---|
| MG 456 | Ber. | C 57,9 | H 3,0 | N 10,0 | S 14,0 |
| $C_{22}H_{46}NO_2S_2Cl$ | Gef. | C 56,9 | H 3,1 | N 10,2 | S 13,2 |

Beispiel 6

Herstellung des Salzes der Formel (I) mit X=Strukturelement (IV), wobei $R^1$=n-$C_8H_{17}$; $R^2=R^3=CH_3$; $R^7$=H; Y=Hexamethylen und A=Cl bedeuten.
(4,15-Dithia-6,13-diazaoctadecane-1,18-diaminium, 2,17-dihydroxy-N,N,N′,N′-tetramethyl-N,N′-dioctyl-5,14-dithioxo-, dichlorid):

Zu 2.080 g einer 15 gew.-%igen wäßrigen Lösung von Di-Natrium-hexamethylenbisdithiocarbamat werden 1060 g einer 54 gew.-%igen wäßrigen Lösung von 3-Chlor-2hydroxypropyl-N,N,N-dimethyloctylammoniumchlorid gegeben. Das gebildete quaternäre Salz scheidet sich unmittelbar als viskoses gelbes Öl ab. Man trennt die Phasen, wäscht sorgfältig mit Wasser chlorfrei und trocknet.

| | | | | | |
|---|---|---|---|---|---|
| MG 767 | Ber. | C 53,2 | H 9,4 | N 7,3 | S 16,6 |
| $C_{34}H_{72}N_4O_2S_4Cl_2$ | Gef. | C 52,7 | H 9,6 | N 6,8 | S 16,0 |

Beispiel 7

Herstellung des Salzes gemäß Formel

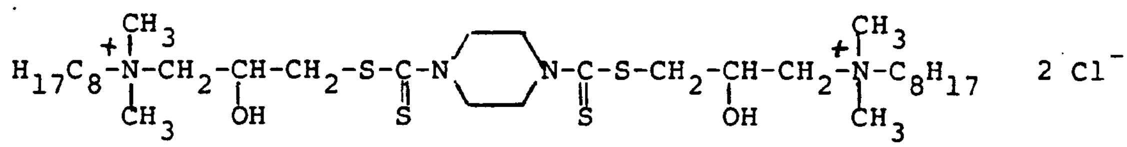

Zu 1.880 g einer 15 gew.-%igen wäßrigen Lösung von Di-Na-1,4-Piperazindiylbis(dithiocarbonat) werden 1.060 g einer 54 gew.-%-igen wäßrigen Lösung von 3-Chlor-2-hydroxy-propyl-N,N,N-dimethyloctylammoniumchlorid gegeben. Das ölig abgeschiedene quaternäre Salz wird abgetrennt und sorgfältig mit Wasser chloridfrei gewaschen. Man reinigt durch Behandeln mit Alkohol. Gelbes, viskoses Öl.

| | | | | | |
|---|---|---|---|---|---|
| MG 737 | Ber. | C 52,1 | H 8,9 | N 7,6 | S 11,4 |
| $C_{32}H_{66}N_4O_2S_4Cl_2$ | Gef. | C 51,6 | H 9,2 | N 6,9 | S 16,5 |

Beispiel 8

Bestimmung der mikrobioziden Wirkung im Time-Kill-Test.

Bei diesem in Anlehnung an die Empfehlungen des American Petroleum Instituts (API, RP 38 2nd ed., Dec. 1965) durchgeführten Test wird eine hoch angereicherte Keimsuspension (Keimzahl $10^6$-$10^8$) mit der gewünschten Menge Biozid versetzt und 24 h bei 25 °C bebrütet. Anschließend wird eine geometrische Verdünnungsreihe bis 6 durchgeführt; je 1 ml wird mit 10 ml Nähragar auf Platten vermischt und 48 h bei 37 °C bebrütet. Aus der Auszählung der Kolonien wird die Abtötungsrate berechnet.

$$\text{Abtötungsrate in \%} = 100 - \frac{\text{Keimzahl der Probe} \cdot 100}{\text{Keimzahl der Nullprobe}}$$

Die Figur zeigt das Verhältnis von Keimzahl zur Abtötungsrate. Hieraus wird deutlich, daß auch eine von 99,9 % auf 100 % gesteigerte Abtötungsrate einer bedeutenden Wirkungsverbesserung entspricht.

Der Tabelle ist die biozide Wirksamkeit der untersuchten Salze der Formel (I) gegen Pilze und Bakterien im Vergleich zur bioziden Wirksamkeit der Ausgangsverbindungen zu entnehmen. Angegeben ist die Abtötungsrate gegenüber den Testkeimen, wobei die Anwendungskonzentration der Biozide 50 ppm bzw. 25 ppm betrug. Die Biozide wurden als 1 gew.-%ige wäßrige Lösung der angereicherten Keimsuspension (40 ml), welche 8,5 g NaCl/l enthielt, zugesetzt.

Tabelle

| | Aspergillus niger 50 ppm | Escherichia coli 25 ppm | Staphylococcus aureus 25 ppm |
|---|---|---|---|
| N-Methylcarbamat *) | 28,3 | 8,7 | 30,4 |
| Quab R 342 | 91,0 | 99,9 | 99,9 |
| Salz gem. Beispiel 1 | 99,9 | 100 | 100 |
| Dioctylcarbamat **) | 91,9 | 99,0 | |
| Quab R 342 | 91,0 | 99,9 | 99,5 |
| Salz gem. Beispiel 2 | 91,3 | 99,9 | 99,9 |
| Octylcarbamat ***) | 6,7 | 93,1 | 95,2 |
| Quab R 286 | 0 | 23,2 | 0 |
| Salz gem. Beispiel 3 | 99,9 | 100 | 100 |
| Dioctylcarbamat **) | 91,9 | 99,0 | |
| Quab R 286 | 0 | 23,2 | 0 |
| Salz gem. Beispiel 4 | 90,7 | 88,8 | 100 |
| O-Octyldithio-kohlensäure-Na-Salz | 6,7 | 94,1 | 99,0 |
| Quab R 286 | 0 | 23,2 | 0 |
| Salz gem. Beispiel 5 | 86,4 | 50,0 | 99,0 |
| Hexamethylendiyl-bis(dithiocarbamin-säure-Na-Salz | 13,3 | 12,3 | 60,0 |
| Quab R 286 | 0 | 23,2 | 0 |
| Salz gem. Beispiel 6 | 98,9 | 99,9 | 100 |
| 1,4-Piperazindiyl-bis(dithiocarbonat) | 0 | 46,2 | 21,7 |
| Quab R 286 | 0 | 23,2 | 0 |
| Salz gem. Beispiel 7 | 92,7 | 99,9 | 99,8 |

*) N-Methyldithiocarbaminsäure Natriumsalz
**) N,N-Dioctyldithiocarbaminsäure Natriumsalz
***) N,-Octyldithiocarbaminsäure Natriumsalz

Quab R 342 (Degussa AG) = 3-Chlor-2-hydroxypropyl-N,N-dimethyldodecylammoniumchlorid

Quab R 286 (Degussa AG) = 3-Chlor-2-hydroxypropyl-N,N-dimethyloctylammoniumchlorid

Beispiel 9

Hergestellt wird ein mikrobiozides Mittel, enthaltend, bezogen auf den Gesamtgehalt an Wirkstoffen, 10 Gew.-% des quaternären Ammoniumsalzes gemäß Beispiel 1 und 90 Gew.-% 1,3,5-Tris(2-hydroxyethyl)-hexahydro-s-triazin.

Aus 750 g wäßrigem Formaldehyd (40 Gew.-%) und 611 g Ethanolamin wird durch Vereinigung unter Kühlung 1,3,5-Tris(2-hydroxyethyl)-hexahydro-s-triazin hergestellt. Anschließend werden 420 g Isopropanol zugegeben und 81 g des nach Beispiel 1 hergestellten quaternären Ammoniumsalzes (1-Dodecanaminium, N-[2-hydroxy-3-[[(methylamino)thioxomethyl]thio]propyl]-N,N-dimethyl, chlorid) unter Rühren hinzugefügt. Es wird solange nachgerührt, bis die Lösung keine Feststoffpartikel mehr aufweist.

Beispiel 10

Die mikrobiozide Wirkung des in Beispiel 9 hergestellten Mittels wurde im Vergleich zu den darin enthaltenen Mikrobioziden gegen Bakterien und Pilze getestet. In der Tabelle sind die untersuchten Teststämme und die Wirkstoffkonzentration (ppm) in den untersuchten Lösungen angegeben, bei welcher nach einer Bebrütung von 24 Stunden bei 25 °C eine Abtötungsrate von 99,9 % erreicht wird. Den Ergebnissen in der Tabelle ist zu entnehmen, daß das Mittel mit der Wirkstoffkombination gemäß Beispiel 9 eine mindestens doppelt so hohe mikrobiozide Aktivität entfaltet wie das Triazinderivat allein. Ferner gelingt es bei mehreren Teststämmen, durch Verwendung des Mittels des Beispiels 9, das nur 10 % des quaternären Ammoniumsalzes des Beispiels 1 enthält, bei der angegebenen Wirkstoff-Gesamtkonzentration die gleiche Abtötungsrate zu erreichen wie mit dem Salz des Beispiels 1 allein bei der gleichen Wirkstoff-Gesamtkonzentration.

**Tabelle**

| Test-stämme | Mikrobiozid des Beispiels 9 (Wirkstoff-kombination) (ppm) | Mikrobiozid des Beispiels 1 (ppm) | s-Triazin-derivat (ppm) |
|---|---|---|---|
| Bacillus subtilis | 50 | 50 | 100 |
| Proteus vulgaris | 50 | 50 | 100 |
| Serratia marcescens | 50 | 50 | 100 |
| Staphylococcus aureus | 25 | 10 | 250 |
| Aspergillus niger | 100 | 50 | 250 |
| Penicillum funiculosum | 50 | 50 | 150 |

## Patentansprüche

1. Mikrobiozide Mittel, enthaltend mindestens ein mikrobiozid wirksames quaternäres Ammoniumsalz in einer wäßrigen oder alkoholischen Lösung,
dadurch gekennzeichnet,
daß das quaternäre Ammoniumsalz die Struktur der allgemeinen Formel (I)

$$\left[ R^1 - \overset{\displaystyle R^2}{\underset{\displaystyle R^3}{\overset{|}{\underset{|}{N^+}}}} - CH_2 - \underset{\displaystyle OH}{\underset{|}{CH}} - CH_2 - S - \underset{\displaystyle S}{\underset{\|}{C}} - X \right]_n A^{n-} \qquad (I),$$

aufweist, worin bedeuten:

$R^1$ eine lineare ($C_8$-$C_{16}$)-Alkylgruppe oder eine ($C_8$-$C_{16}$)-Alkylphenoxyethoxyethylgruppe, wenn $R^2$ und $R^3$ gleich sind und Methyl oder Hydroxyethyl bedeuten, oder

ein Strukturelement der allgemeinen Formel (II)

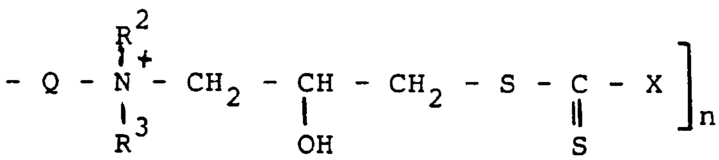 $A^{n-}$ (II),

worin Q für α, ω-($C_2$-$C_6$)-Alkylen, das innenständig auch methylsubstituiert sein kann,

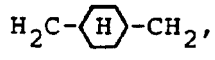

$CH_2$-$CH_2$-O-$CH_2CH_2$ oder $CH_2$-$CH_2$-N($CH_3$)-$CH_2$-$CH_2$ steht, wenn $R^2$ und $R^3$ in Formel (I) und (II) jeweils Methyl bedeuten oder im Falle von Q gleich Ethylen $R^2$ in (I) und II Methyl und $R^3$ in (I) und (II) auch gemeinsam für eine Ethylengruppe stehen können;

X die Gruppe $OR^4$, worin $R^4$ für einen linearen oder verzweigten Alkylrest mit 8 bis 18 C-Atomen steht,
oder
die Gruppe $NR^5R^6$, worin $R^5$ Wasserstoff oder eine lineare ($C_8$-$C_{18}$)-Alkylgruppe und $R^6$ eine ($C_1$-$C_{18}$)-Alkyl- oder Benzylgruppe bedeuten oder $NR^5R^6$ für den Pyrrolidino-, 1,3-Oxazolidino, Piperidino oder Morpholinorest steht, wobei in das Strukturelement (II) enthaltenden Salzen die Gruppe $NR^5R^6$ mindestens einen linearen ($C_8$-$C_{12}$)-Alkylrest aufweist, oder

ein Strukturelement der allgemeinen Formel (III) oder (IV)

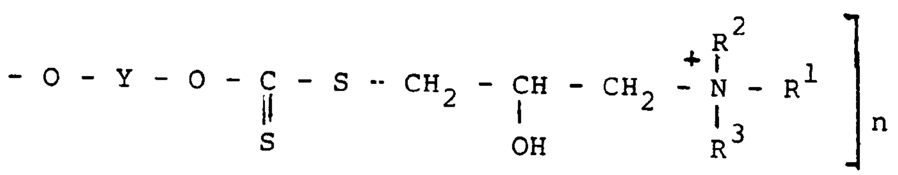 $A^{n-}$ (III)

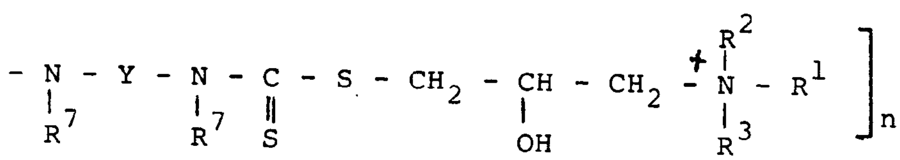 $A^{n-}$ (IV),

worin Y die gleiche Bedeutung wie Q hat und $R^7$ Wasserstoff oder Methyl bedeutet, jedoch im Falle von Y gleich Ethylen beide Substituenten $R^7$ auch gemeinsam für eine Ethylengruppe stehen können, und wobei in das Strukturelement (III) oder IV enthaltenden Salzen $R^1$ nicht dem Strukturelement (II) entspricht;

A ein Halogenid, Sulfat, Hydrogensulfat, Hydrogen- oder Dihydrogenphosphat, Nitrat, Formiat, Acetat, Benzoat und

n die Wertigkeit 1 oder 2 des Anions.

**2.** Mikrobiozides Mittel nach Anspruch 1,
dadurch gekennzeichnet,
daß in dem quaternären Ammoniumsalz der Formel (I) bedeuten: $R^1$ eine lineare $C_8$-$C_{12}$-Alkylgruppe, $R^2$ und $R^3$ eine Methylgruppe, X eine $R^4O$- oder $R^5R^6N$-Gruppe, worin $R^4$ eine lineare ($C_8$-$C_{12}$)-Alkylgruppe, $R^5$ Wasserstoff oder eine lineare ($C_8$-$C_{12}$)-Alkylgruppe und $R^6$ eine lineare ($C_8$-$C_{12}$)-Alkylgruppe oder, sofern $R^1$ eine n-Dodecylgruppe bedeutet, eine Methylgruppe und A vorzugsweise Chlorid.

**3.** Mikrobiozides Mittel nach Anspruch 1,
dadurch gekennzeichnet,
daß in dem quaternären Ammoniumsalz der Formel (I) X ein Strukturelement der Formel (III) oder (IV), $R^1$ eine lineare ($C_8$-$C_{12}$)-Alkylgruppe, $R^2$ und $R^3$ eine Methylgruppe, Y eine α, ω-($C_2$-$C_6$)-Alkylen, eine

$CH_2CH_2$-O-$CH_2CH_2$ - oder $CH_2CH_2$-N($CH_3$)-$CH_2CH_2$-Gruppe und $R^7$ Wasserstoff und A vorzugsweise Chlorid bedeuten.

4. Mikrobiozides Mittel nach einem der Ansprüche 1 bis 3,
dadurch gekennzeichnet,
daß es zusätzlich zu den quaternären Ammoniumsalzen der Formel I 1 bis 99 Gew.-%, bezogen auf die Gesamtheit der mikrobioziden Wirkstoffe, andere mikrobiozid wirksame Stoffe enthält.

5. Mikrobiozides Mittel nach Anspruch 4,
dadurch gekennzeichnet,
daß es ein Alkalisalz eines mikrobiozid wirksamen Dithiokohlensäure-O-esters oder Dithiocarbamats enthält.

6. Mikrobiozides Mittel nach Anspruch 4,
dadurch gekennzeichnet,
daß es zusätzlich ein oder mehrere andere quaternäre Ammoniumsalze mit mikrobiozider Wirksamkeit enthält.

7. Mikrobiozides Mittel nach Anspruch 4,
dadurch gekennzeichnet,
daß es zusätzlich biozid wirksame Umsetzungsprodukte aus aliphatischen $C_1$- bis $C_5$- Mono- oder Dialdehyden mit primären oder sekundären Aminen enthält.

8. Mikrobiozides Mittel nach Anspruch 7,
dadurch gekennzeichnet,
daß es ein Umsetzungsprodukt enthält, das unter Verwendung von 2-Hydroxyalkyl- oder Di-2-hydroxyalkylaminen gewonnen wurde.

9. Mikrobiozides Mittel nach Anspruch 8,
dadurch gekennzeichnet,
daß es aus Formaldehyd und Ethanolamin erhaltenes 1,3,5-Tris(2-hydroxyethyl)-hexahydro-s-triazin enthält.

10. Mikrobiozides Mittel nach den Ansprüchen 2 und 9,
dadurch gekennzeichnet,
daß es, bezogen auf die Gesamtheit der mikrobioziden Wirkstoffe, 75 bis 95 Gew.-% 1,3,5-Tris(2-hydroxyethyl)-hexahydro-s-triazin und 25 bis 5 Gew.-% eines quaternären Ammoniumsalzes der allgemeinen Formel (I), worin $R^1$, $R^2$, $R^3$ und X die Bedeutung gemäß Anspruch 2 haben, vorzugsweise $R^1$=n-$C_{12}H_{25}$, $R^2$=$R^3$=$CH_3$ und X=$CH_3$-NH, in wäßrig-alkoholischer Lösung enthält.

11. Verfahren zur Herstellung eines mikrobioziden Mittels gemäß Anspruch 9,
dadurch gekennzeichnet,
daß man wäßrigen Formaldehyd mit Ethanolamin im Molverhältnis 1 : 1 miteinander umsetzt und in die so hergestellte Lösung, enthaltend 1,3,5-Tris(2-hydroxyethyl)-hexahydro-s-triazin, ein quaternäres Ammoniumsalz gemäß allgemeiner Formel (I) oder ein dieses enthaltendes wäßriges oder alkoholisches Reaktionsgemisch aus seiner Herstellung hinzufügt und, soweit erforderlich, vor, während oder nach dieser Zugabe Wasser und/oder einen niederen Alkohol zur vollständigen Lösung und/oder zur Einstellung der Konzentration hinzufügt.

## Claims

1. Microbiocide comprises at least one microbiocidally active quaternary ammonium salt in an aqueous or alcoholic solution, characterised in that the quaternary ammonium salt has the structure of the general formula (I)

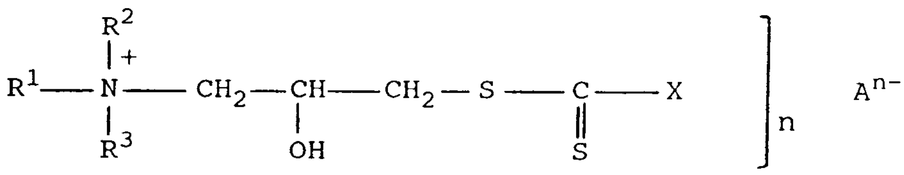
(I)

wherein:

$R^1$ represents a linear ($C_8$-$C_{16}$) -alkyl group or a ($C_8$-$C_{16}$)-alkylphenoxyethoxyethyl group when $R^2$ and $R^3$ are identical and represent methyl or hydroxyethyl,

or a structural element of the general formula (II)

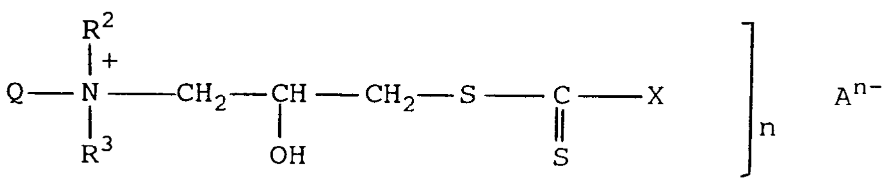
(II)

wherein Q stands for α, ω-($C_2$-$C_6$)-alkylene, which may also be methyl-substituted in an intermediate position,

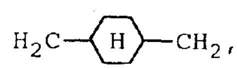

$CH_2$-$CH_2$-O-$CH_2$-$CH_2$ or $CH_2$-$CH_2$-N($CH_3$)-$CH_2$-$CH_2$, when $R^2$ and $R^3$ in each case represent methyl in formula (I) and (II) or in the case of Q being equal to ethylene $R^2$ may stand for methyl in (I) and (II) and $R^3$ in (I) and (II) may together stand for one ethylene group;

X represents the group $OR^4$, wherein $R^4$ stands for a linear or branched alkyl radical having from 8 to 18 C atoms,

or

the group $NR^5R^6$, wherein $R^5$ represents hydrogen or a linear ($C_8$-$C_{18}$)-alkyl group and $R^6$ represents a ($C_1$-$C_{18}$)-alkyl or benzyl group or $NR^5R^6$ stands for the pyrrolidino, 1,3-oxazolidino, piperidino or morpholino radical, wherein, in salts containing the structural element (II) the group $NR^5R^6$ exhibits at least one linear ($C_8$-$C_{12}$)-alkyl radical, or

a structural element of the general formula (III) or (IV)

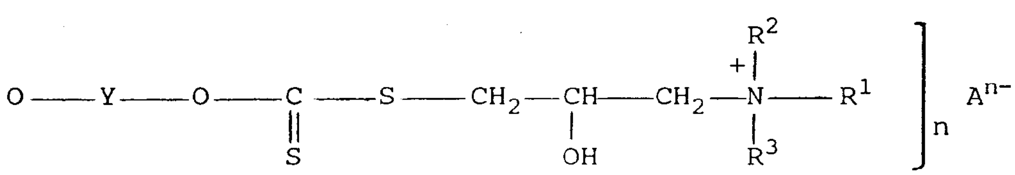
(III)

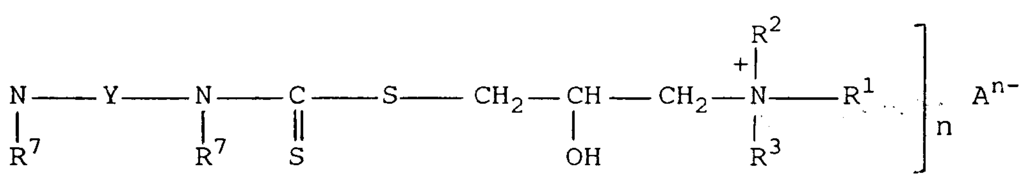
(IV)

wherein Y has the same meaning as Q and $R^7$ represents hydrogen or methyl, however if Y is ethylene both the substituents $R^7$ may also together stand for one ethylene group, and wherein salts containing the structural element (III) or (IV) $R^1$ does not correspond to the structural element (II);

A represents a halide, sulphate, hydrogen sulphate, hydrogen phosphate or dihydrogen phosphate, nitrate, formate, acetate, benzoate and

n represents the valency 1 or 2 of the anion.

2. Microbiocide according to Claim 1, characterised in that in the quaternary ammonium salt of the formula (I) $R^1$ represents a linear $C_8$-$C_{12}$-alkyl group, $R^2$ and $R^3$ represent a methyl group, X represents a $R^4O$ group or $R^5R^6N$ group, wherein $R^4$ stands for a linear ($C_8$-$C_{12}$)-alkyl group, $R^5$ stands for hydrogen or a linear ($C_8$-$C_{12}$)-alkyl group and $R^6$ stands for a linear ($C_8$-$C_{12}$)-alkyl group or, if $R^1$ represents a n-dodecyl group, a methyl group, and A preferably represents chloride.

3. Microbiocide according to Claim 1, characterised in that in the quaternary ammonium salt of the formula (I) X represents a structural element of the formula (III) or (IV), $R^1$ represents a linear ($C_8$-$C_{12}$)-alkyl group, $R^2$ and $R^3$ represent a methyl group, Y represents $\alpha$, $\omega$-($C_2$-$C_6$)-alkylene, a $CH_2CH_2$-O-$CH_2CH_2$ group or $CH_2CH_2$-N($CH_3$)-$CH_2CH_2$ group and $R^7$ represents hydrogen and A preferably represents chloride.

4. Microbiocide according to one of Claims 1 to 3, characterised in that it comprises from 1 to 99 wt-% of other microbiocidally active substances, calculated on total microbiocidal active ingredients, in addition to the quaternary ammonium salts of the formula I.

5. Microbiocide according to Claim 4, characterised in that it comprises an alkali salt of a microbiocidally active dithiocarbonic acid O-ester or dithiocarbamate.

6. Microbiocide according to Claim 4, characterised in that it additionally comprises one or more other quaternary ammonium salts having a microbiocidal action.

7. Microbiocide according to Claim 4, characterised in that it additionally comprises biocidally active reaction products of aliphatic $C_1$- to $C_5$- mono- or dialdehydes with primary or secondary amines.

8. Microbiocide according to Claim 7, characterised in that it comprises a reaction product obtained using 2-hydroxyalkyl amines or di-2-hydroxyalkyl amines.

9. Microbiocide according to Claim 8, characterised in that it comprises 1,3,5-tris(2-hydroxyethyl)-hexahydro-s-triazine obtained from formaldehyde and ethanolamine.

10. Microbiocide according to Claims 2 and 9, characterised in that it comprises, calculated on total microbiocidal active ingredients, from 75 to 95 wt-% 1,3,5-tris(2-hydroxyethyl)hexahydro-s-triazine and from 25 to 5 wt-% of a quaternary ammonium salt of the general formula (I), wherein $R^1$, $R^2$, $R^3$ and X are as defined in Claim 2, and preferably $R^1$ = n-$C_{12}H_{25}$, $R^2$=$R^3$=$CH_3$, and X=$CH_3$-NH, in aqueous-alcoholic solution.

11. Process for the preparation of a microbiocide according to Claim 9, characterised in that aqueous formaldehyde is reacted with ethanolamine in a molar ratio of 1 : 1 and to the solution thus prepared, which contains 1,3,5-tris(2-hydroxyethyl)hexahydro-s-triazine, is added a quaternary ammonium salt according to the general formula (I) or an aqueous or alcoholic reaction mixture from the preparation thereof comprising the salt, and, to the extent to which it is necessary, water and/or a low alcohol is/are added before, during or after the addition in order to complete the solution and/or adjust the concentration.

## Revendications

1. Agent microbiocide, contenant au moins un sel d'ammonium quaternaire actif comme microbiocide dans une soslution aqueuse ou alcoolique,
caractérisé :
en ce que le sel d'ammonium quaternaire comprend la structure de la formule générale (I) :

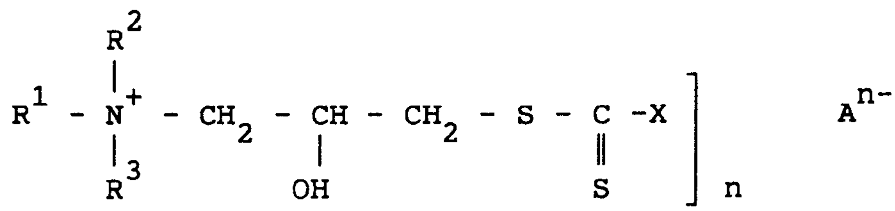 (I)

où

$R_1$ représente un groupe alkyle linéaire en ($C_8$-$C_{16}$) ou un groupe alkyl phénoxyéthoxyéthyle, si $R^2$ et $R^3$ sont égaux et représentent méthyle ou hydroxyéthyle, ou un élément de structure de formule générale (II) :

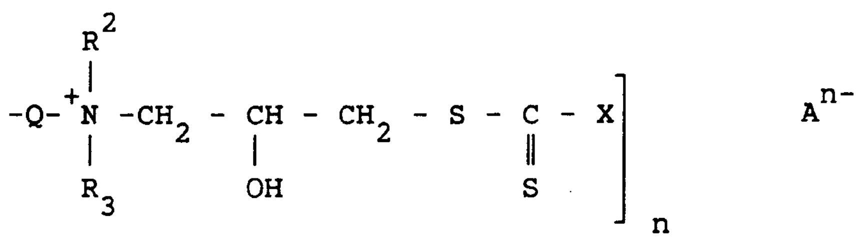 (II)

où Q représente $\alpha$, $\omega$ -($C_2$-$C_6$)-alkylène ; qui peut être substitué par méthyle,

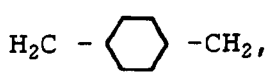

$CH_2$-$CH_2$-O-$CH_2$ ou $CH_2$-$CH_2$-N($CH_3$)-$CH_2$-$CH_2$, si $R^2$ et $R^3$ dans les formules (I) et (II) représentent chacun le méthyle ou au cas où Q égal éthylène $R^2$ dans (I) et (II) peut représenter du méthyle et $R^3$ dans (I) et (II) peut présenter aussi en commun un groupe éthylène ;

X représente le groupe $OR^4$ dans lequel $R^4$ remplace un radical alkyle linéaire ou ramifié avec de 8 à 18 atomes de carbone ou le groupe $NR^5R^6$, dans lequel $R^5$ de l'hydrogène ou un groupe alkyle en ($C_8$-$C_{18}$) et $R^6$ un groupe alkyle en ($C_1$-$C_{18}$) ou un groupe benzyle ou $NR^5R^6$ représente le pyrrolidino-1,3-oxazolidino, piperidino ou le radical morpholino, le groupe $NR^5R^6$ dans des sels contenant l'élément de structure (II) ayant au moins un radical alkyle en ($C_8C_{12}$) linéaire,
ou un élément de structure de formule générale (III) ou (IV)

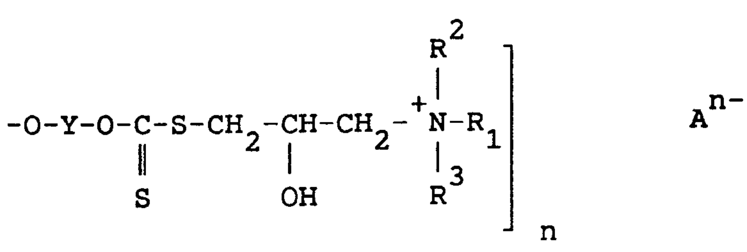 (III)

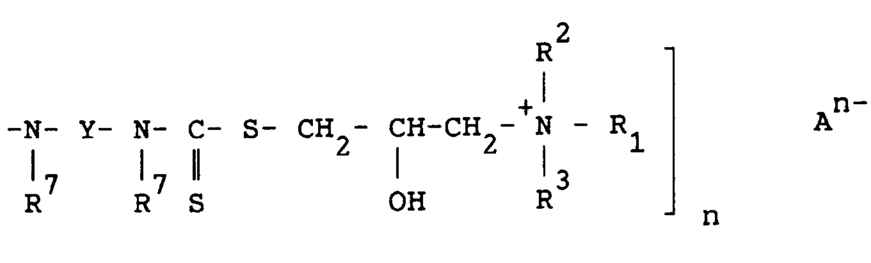 (IV)

dans lesquelles Y a la même signification que Q et $R^7$ représente de l'hydrogène ou du méthyle, toutefois dans le cas où Y = éthylène les deux substituants $R^7$ peuvent aussi représenter en commun un groupe

éthylène et dans des sels contenant l'élément de structure (III) ou (IV), $R_1$ ne correspondant pas à l'élément de structure (II),

A représente un halogénure, sulfate, hydrogène sulfate, hydrogène ou dihydrogènephosphate, nitrate, formiate, acétate benzoate et,

n la valence 1 ou 2 de l'anion.

**2.** Agent microbiocide selon la revendication 1, caractérisé :
- en ce que dans le sel d'amonnium quaternaire de formule (I), $R_1$ signifie un groupe allyle en ($C_8$-$C_{12}$) linéaire, $R_2$ et $R_3$ un groupe méthyle, X un groupe $R^4O$- ou un groupe $R^5R^6N$, où $R^4$ désigne un groupe allyle en ($C_8$-$C_{12}$) linéaire, $R^5$ de l'hydrogène ou un groupe allyle en ($C_8$-$C_{12}$) linéaire et $R^6$ un groupe allyle en ($C_8$-$C_{12}$) linéaire, en cas de $R^1$ représente un groupe n-dodécyle, un groupe méthyle et A de préférence du chlorure.

**3.** Agent microbiocide selon la revendication 1, caractérisé :
- en ce que dans le sel d'ammonium quaternaire de formule (I) X représente un élément de structure de la formulme (III) ou (IV), $R_1$ un groupe allyle en ($C_8$-$C_{12}$) linéaire, $R^2$ et $R^3$ un groupe méthyle, Y un $\alpha$, $\omega$ -($C_2$-$C_6$)-allylène, un groupe $CH_2CH_2$-O-$CH_2CH_2$ ou un groupe $CH_2CH_2$-N($CH_3$)-$CH_2CH_2$ et $R^7$ de l'hydrogène et A de préférence du chlorure.

**4.** Agent microbiocide selon l'une des revendications 1 à 3, caractérisé :
- en ce qu'il contient en plus des sels d'ammonium quaternaire de la formule (I) de 1 à 99 % en poids, par rapport au total des substances actives microbiocides, d'autres matières actives comme microbiocides.

**5.** Agent microbiocide selon la revendication 4, caractérisé :
- en ce qu'il contient un sel alcalin d'un ester-O d'acide dithiocarbonique ou de dithiocarbamate.

**6.** Agent microbiocide selon la revendication 4, caractérisé :
- en ce qu'il contient en plus un ou plusieurs autres sels d'ammonium quaternaire ayant une efficacité microbiocide.

**7.** Agent microbiocide selon la revendication 4, caractérisé :
- en ce qu'il contient en plus des produits efficaces comme biocides provenant de la réaction de $C_1$ à $C_5$-mono ou dialdéhydes aliphatiques avec des amines primaires ou secondaires.

**8.** Agent microbiocide selon la revendication 7, caractérisé :
- en ce qu'il contient un produit de réaction, qui est obtenu en utilisant des amines 2-hydroxyalkyle ou des amines di-2-hydroxyalkyle.

**9.** Agent microbiocide selon la revendication 8, caractérisé :
- en ce qu'il contient de la 1,3,5-tris(2-hydroxyéthyle)-hexahydro-s-triazine.

**10.** Agent microbiocide selon les revendications 2 et 9, caractérisé :
- en ce qu'il contient en solution alcoolique aqueuse, par rapport à la totalité des substances actives microbiocides, 75 à 95 % en poids de 1,3,5-tris(2-hydroxyéthyle)-hexahydro-s-triazine et 25 à 5 % en poids d'un sel d'ammonium quaternaire de la formule générale (I), où $R^1$, $R^2$, $R^3$ et X ont la signification selon la revendication 2, de préférence $R^1$ = n-$C_{12}H_{25}$, $R^2$ = $R^3$ = $CH_3$ et X = $CH_3$-NH.

**11.** Procédé de préparation d'un agent microbiocide selon la revendication 9, caractérisé :
- en ce qu'on met en réaction ensemble du formaldéhyde aqueux avec de l'éthanolamine dans le rapport molaire 1:1 et on ajoute dans la solution ainsi préparée, contenant de la 1,3,5-tris(2-hydroxyéthyle)-hexa-hydro-s-triazine, un sel d'ammonium quaternaire selon la formule générale (I) ou un mélange réactionnel contenant celui-ci, aqueux ou alcoolique provenant de sa préparation et, on ajoute, si nécessaire, avant, pendant ou après cette addition de l'eau et/ou un alcool faible pour compléter la solution et/ou pour ajuster la concentration.

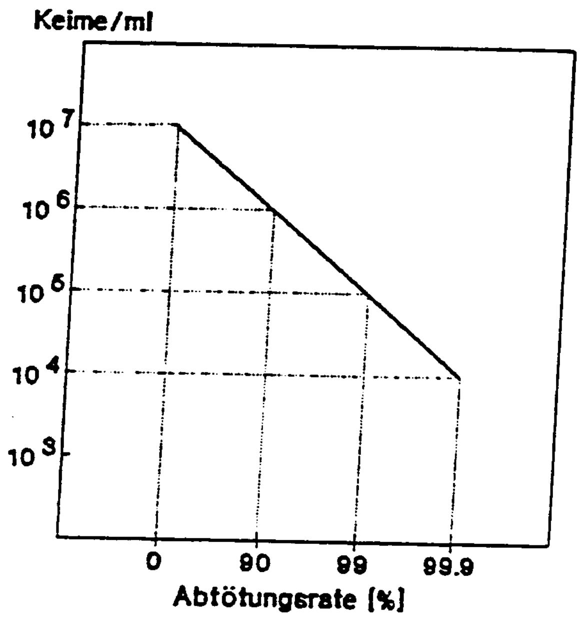
Keime/ml
10 7
10 6
10 5
10 4
10 3
0
90
99
99.9
Abtötungsrate [%]